# EUROPEAN PATENT SPECIFICATION

(11) **EP 1 855 777 B1**
(45) Date of publication and mention of the grant of the patent: **16.11.2011**
(21) Application number: 05822171.4
(22) Date of filing: 16.12.2005
(51) Int. Cl.: B01D 35/153, C02F 9/00, B01D 27/10

(54) **FLUID FLOW INTERRUPTION MEANS FOR FILTER OF WATER PURIFIER**
MITTEL ZUR FLÜSSIGKEITSFLUSSUNTERBRECHUNG FÜR WASSERREINIGUNGSFILTER
MOYEN D'INTERRUPTION D'ECOULEMENT DE FLUIDE POUR FILTRE D'EPURATEUR D'EAU

(30) Priority: 11.03.2005 KR 20050020547
(43) Date of publication of application: 21.11.2007
(73) Proprietor: Microfilter Co., Ltd, Jincheong-gun, Chungcheongbuk-do 365-842 (KR)
(72) Inventor: KIM, Min-won 5, Chungcheongbuk-do 365-842 (KR)
(74) Representative: Böck, Bernhard
(86) International application number: PCT/KR2005/004344
(87) International publication number: WO 2006/095954

(56) References cited:
- WO-A1-01/83079
- GB-A- 2 381 760
- KR-B1- 100 367 233
- US-A- 3 777 889
- US-A- 5 336 406
- US-A- 5 744 030
- US-A1- 2003 042 191

## Description

### Technical Field

The present invention relates to fluid flow interruption means which is disposed in a filter for a water purifier so as to interrupt fluid flow even without using a separate water flow interruption valve when cleaning the inside of the filter or replacing a filtering element arranged in the filter, thereby improving an outer appearance of the water purifier and rendering user convenience.

### Background Art

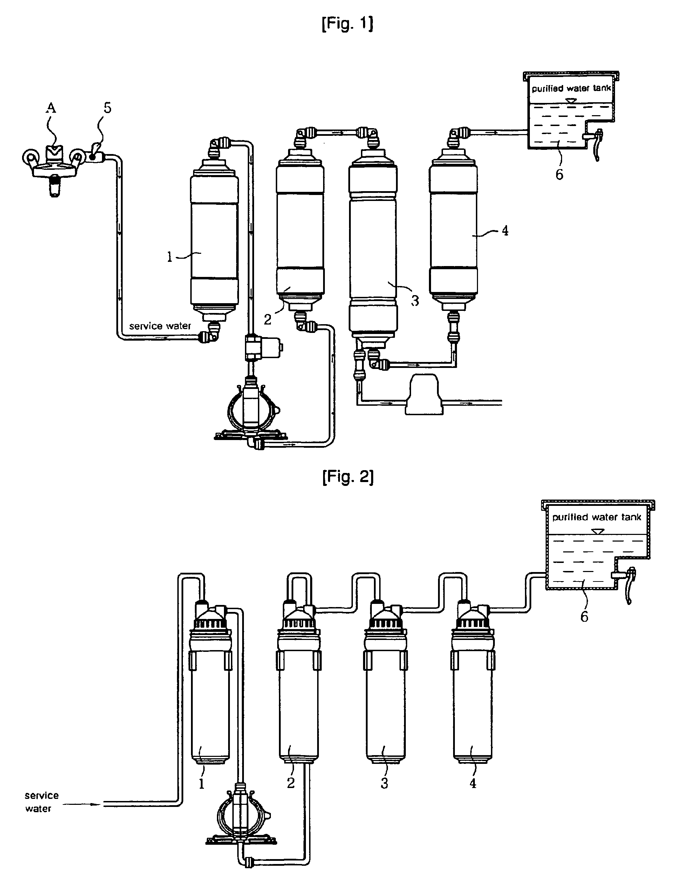

In a conventional water purifier for purifying water through a physical or chemical procedure, as can be readily seen from FIG. 1, a pre-treatment filter 1, a pre-carbon filter 2, a membrane filter 3, a post-carbon filter 4, and so forth, each of which has an inlet port and an outlet port are selectively adopted and used depending upon an intended use of the water purifier.

The inlet ports and the outlet ports of the respective filters for the water purifier are connected with one another by tubes. The inlet port of the pre-treatment filter 1 is connected to a water supply source A via a water pipe, and a fluid flow interruption valve 5 is installed on the water pipe which extends between the inlet port of the pre-treatment filter 1 and the water supply source A.

A purified water tank 6 is connected to a water pipe which is connected to the outlet port of the post-carbon filter 4.

In the conventional filter for a water purifier constructed as mentioned above, when the filter has been used for a predetermined period, the inside of the filter must be cleaned or a filtering element arranged in the filter must be replaced with new one.

To this end, the fluid flow interruption valve 5 is manipulated to a closed position so that fluid flow through the water pipe is interrupted. Then, the filter is disassembled from the water pipe, and the inside of the filter is cleaned or the filtering element is substituted with new one. Thereupon, the filter is re-assembled to the water pipe, and the fluid flow interruption valve 5 is manipulated to an open position so that fluid flow through the water pipe is allowed.

The water purifier is generally installed adjacent to a wall for ensuring efficient utilization of a room space, and the fluid flow interruption valve 5 for interrupting water supply is installed on the water pipe which connects the water purifier to the water supply source A. While it is preferred that the fluid flow interruption valve 5 be installed inside a structural component (for example, a kitchen sink, a storage furniture, etc.) arranged in a room so that the fluid flow interruption valve 5 is not viewed from the outside for aesthetical viewpoints, difficulties are caused when installing the fluid flow interruption valve 5 in the narrow space defined in the structural component. Also, since the fluid flow interruption valve 5 installed in the structural component must be manipulated so as to interrupt fluid flow every time the inside of a filter is cleaned or a filtering element arranged in the filter is substituted, convenience is deteriorated.

In order to cope with this problem, while it is possible to install the fluid flow interruption valve 5 adjacent to the water supply source A without considering aesthetics, when using the water supply source A (for example, to wash dishes), smooth movement of the human body may not be ensured due to the presence of the fluid flow interruption valve 5. Further, since the fluid flow interruption valve 5 must be manipulated so as to interrupt fluid flow every time the inside of a filter is cleaned or a filtering element arranged in the filter is substituted, convenience is deteriorated.

Document GB 2 381 760 describes a filter for a water purifier with a head including a guide passage for guiding fluid introduced into the head comprising a fluid flow interruption means with an elastic spring and a fluid flow interrupter functioning to controllably open and close the guide passage by force of the elastic spring when the head and the filter body are coupled to and decoupled from each other. The fluid flow interrupter is disposed in the guide passage communicated with the inlet port and has a fluid guide rod which is formed at one end of the fluid flow interrupter.

### [Disclosure]

### [Technical Problem]

Accordingly, the present invention has been made keeping in mind the above problems occurring in the prior art, and an object of the present invention is to provide fluid flow interruption means which is disposed in a filter for a water purifier so as to interrupt fluid flow even without installing a separate water flow interruption valve when cleaning the inside of the filter or replacing a filtering element arranged in the filter, thereby improving an outer appearance of the water purifier and rendering user convenience.

### [Technical Solution]

In order to achieve the above object, according to one aspect of the present invention. there is provided a filter for a water purifier, including the features of claim 1.

According to another aspect of the present invention, the filter further comprises a bracket having one end which is coupled to an outer surface of the head and the other end which is fastened to a wall.

### [Description of Drawings]

FIG. 1 is a partial main view illustrating a conventional connection structure between filters provided in a water purifier;
FIG. 2 is a partial main view illustrating a connection structure between filters provided in a water purifier in accordance with an embodiment of the present invention;
FIG. 3 is an exploded perspective view illustrating a filter for the water purifier according to the present invention;
FIG. 4 is a partially enlarged cross-sectional view illustrating the assembled state of the filter for the water purifier according to the present invention; and
FIGs. 5a and 5b are cross-sectional views illustrating operational states of the filter for the water purifier according to the present invention.

### [Best Mode]

Reference will now be made in greater detail to a preferred embodiment of the invention, an example of which is illustrated in the accompanying drawings. Wherever possible, the same reference numerals will be used throughout the drawings and the description to refer to the same or like part.

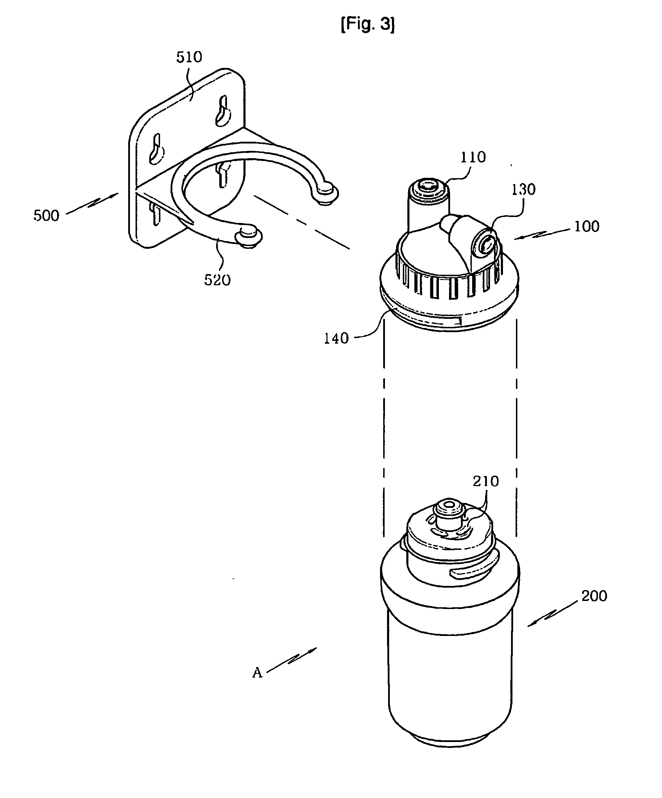

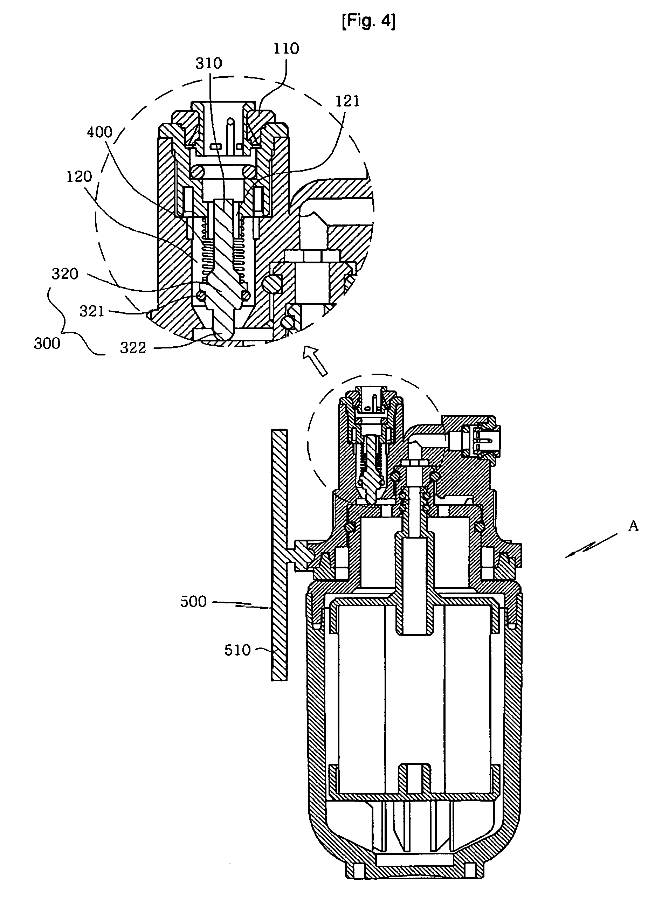

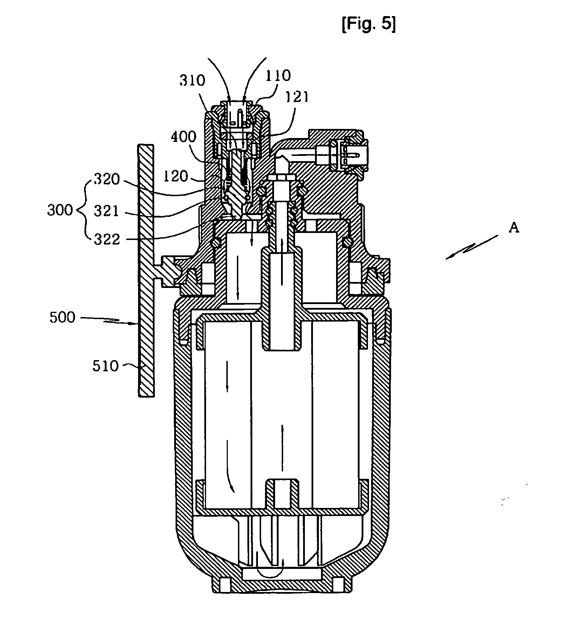

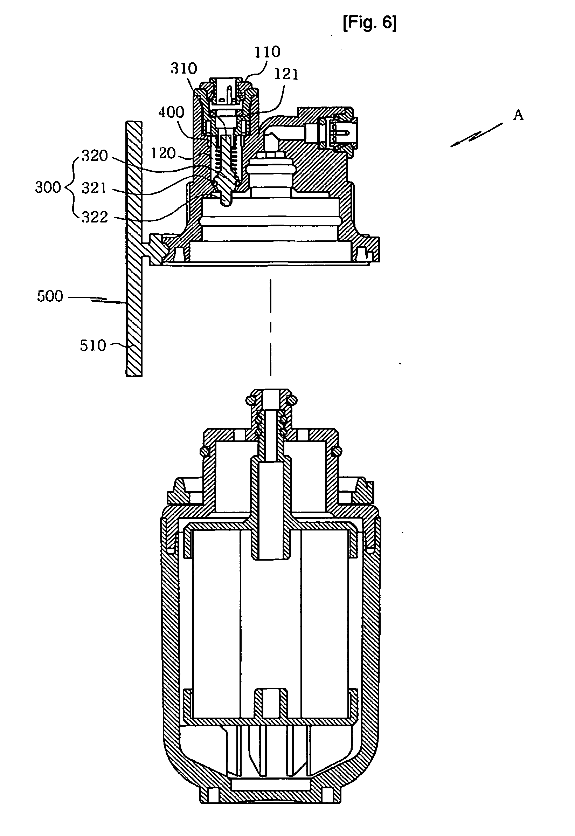

FIG. 2 is a partial main view illustrating a connection structure between filters provided in a water purifier in accordance with an embodiment of the present invention, FIG. 3 is an exploded perspective view illustrating a filter for the water purifier according to the present invention, FIG. 4 is a partially enlarged cross-sectional view illustrating the assembled state of the filter for the water purifier according to the present invention, and FIGs. 5a and 5b are cross-sectional views illustrating operational states of the filter for the water purifier according to the present invention.

As shown in the drawings, a filter A for a water purifier in accordance with an embodiment of the present invention includes a head 100 which is defined with a guide passage 120 for guiding fluid introduced into the head 100 through an inlet port 110 and has an outlet port 130 for discharging purified fluid to the outside, and a filter body 200 which is threadedly locked to the head 100 and into which the fluid flows through the guide passage 120 communicated with the inlet port 110 of the head 100, the filter body 200 purifying the fluid flowing therein and transferring purified fluid to the outlet port 130 of the head 100. The filter A comprises fluid flow interruption means. In the filter A according to the present invention, a fluid flow interrupter 300 is disposed in the guide passage 120 communicated with the inlet port 110 to controllably open and close the guide passage 120 by spring force when the head 100 and the filter body 200 are coupled to and decoupled from each other, and at least one through-hole 210 is defined through the upper end of the filter body 200 so that fluid having passed through the guide passage 120 communicated with the inlet port 110 can flow through the through-hole 210 into the filter body 200.

The fluid flow interruption means provided to the filter A for a water purifier according to the present invention includes an elastic spring 400. The fluid flow interrupter 300 is composed of a fluid guide rod 310 which is formed at one end of the fluid flow interrupter 300 and an opening and closing body 320 which is connected at one end thereof to the fluid guide rod 310 and has a diameter gradually decreasing in a downward direction, around which an O-ring 321 is fitted and from the other end of which an opening and closing projection 322 is formed. A hollow cylindrical prot uberance 121 which has an inner diameter greater than an outer diameter of the fluid guide rod 310 of the fluid flow interrupter 300 is formed at one end of the guide passage 120. The other end of the guide passage 120 has an inner diameter gradually decreasing in the downward direction. The elastic spring 400 has one end through which the fluid guide rod 310 of the fluid flow interrupter 300 is inserted and the other end which is fitted around the hollow cylindrical protuberance 121.

One end of the guide passage 120 has an inner diameter which is greater than the outer diameter of the fluid guide rod 310 of the fluid flow interrupter 300 so that the fluid can flow between the guide passage 120 and the fluid guide rod 310. The other end of the guide passage 120 has the inner diameter which is gradually decreased in the downward direction. The lowermost end of the guide passage 120 has an inner diameter which is slightly greater than the outer diameter of the opening and closing projection 322 so that the opening and closing projection 322 of the opening and closing body 320 can pass through the lowermost end of the guide passage 120.

It the preferred that the through-hole 210 is defined on the upper end of the filter body 200 so as not to be arranged in line with the opening and closing projection 322 which projects from the opening and closing body 320. Due to this fact, when threadedly coupling the filter body 200 to the head 100, the opening and closing body 322 is prevented from being inserted into the through-hole 210, whereby unintentional closing of the guide passage 120 communicated with the inlet port 110 can be avoided.

Preferably, four through-holes are defined through the upper end of the filter body 200 such that they are spaced apart from one another by a predetermined angle in the circumferential direction of the filter body 200.

The fluid flow interruption means provided to the filter A for a water purifier according to the present invention further includes a bracket 500. The bracket 500 is composed of a fastening plate 510, and a clip element 520 which is formed on a surface of the fastening plate 510 and is partially opened. The clip element 520 which is provided to the bracket 500 and is partially opened is fitted around the outer surface of the head 100, and the fastening plate 510 is fastened to a wall member. At this time, in order to ensure that the bracket 500 is firmly coupled to the head 100, it is preferred that the outer surface of the head 100 around which the clip element 520 is fitted is defined with a fitting groove 140.

The fluid flow interruption means of the present invention can be installed in all filters provided in a water purifier, such as a pre-treatment filter 1, a pre-carbon filter 2, a membrane filter 3, a post-carbon filter 4, and so forth. Of course, it is to be readily understood that the fluid flow interruption means of the present invention can be selectively installed in one or more of the filters provided in a water purifier.

When using the filter A for a water purifier which is provided with the fluid flow interruption means according to the present invention constructed as mentioned above, the fluid flow interrupter 300 is disposed in the guide passage 120 communicated with the inlet port 110. The fluid guide rod 310 which is formed at one end of the fluid flow interrupter 300 is inserted into the hollow cylindrical protuberance 121 which is formed at one end of the guide passage 120. At this time, the elastic spring 400 is fitted around the outer surface of the fluid guide rod 310 which is inserted into the hollow cylindrical protuberance 121, and the distal end of the opening and closing projection 322 which projects downwards from the opening and closing body 320 is exposed out of the lower end of the guide passage 120 and is supported on the upper end surface of the filter body 200.

At this time, due to the fact that the elastic spring 400 is maintained in a compressed state with the other end thereof seated on the upper end of the guide passage 120 and one end thereof seated on the opening and closing body 320, service water which is introduced into the head 100 through the inlet port 110 flows through the space defined between the guide passage 120 and the fluid guide rod 310 which is inserted into the hollow cylindrical protuberance 121, and is then discharged out of the lowermost end of the guide passage 120 to the upper end surface of the filter body 200.

Thereafter, the service water is introduced into the filter body 200 through the through-holes 210 which are defined through the upper end of the filter body 200, is purified, and is discharged to the outside through the outlet port 130. In this way, a water purifying procedure is implemented.

This water purifying procedure using the fluid flow interrupter can be entirely or selectively adapted for the filters provided in a water purifier.

While the water purifier is used, if it is necessary to clean the inside of the filter A or substitute a filtering element arranged in the filter A, by grasping the filter body 200 of the filter A and unthreading the filter body 200 from the head 100, the elastic spring 400 which is maintained in a compressed state between the fluid guide rod 310 and the one end of the guide passage 120 is decompressed, and the opening and closing body 320 of the fluid flow interrupter 300 further projects out of the lowermost end of the guide passage 120 and is engaged with the other end of the guide passage 120 which is gradually decreased in its inner diameter in the downward direction, as a result of which the guide passage 120 is closed by the opening and closing body 320.

Due to the fact that the O-ring 321 is fitted around the opening and closing body 320 of the fluid flow interrupter 300, waterproofness is ensured in a reliable manner.

As a consequence, since the service water introduced into the head 100 through the inlet port 110 is prevented from flowing into the filter body 200, even though a separate fluid flow interruption valve is not installed, fluid flow can be effectively interrupted, whereby it is possible to conveniently clean the inside of the filter A or substitute the filtering element arranged in the filter A.

The filter A for a water purifier according to the present invention, which is provided with the fluid flow interrupter, can be used in a state in which the clip element 520 of the bracket 500 fastened to the wall is fitted into the fitting groove 140 defined in the head 100, whereby the filter A can be firmly installed in the water purifier.

### Industrial Applicability

As is apparent from the above descriptions, the present invention provides advantages in that, since fluid flow interruption means is disposed in a filter for a water purifier, it is possible to interrupt fluid flow even without installing a separate water flow interruption valve, whereby an outer appearance of the water purifier can be improved and user convenience can be ensured.

## Claims

1. A filter (A) for a water purifier, including a head (100) which is defined with a guide passage (120) for guiding fluid introduced into the head (100) through an inlet port (110) and has an outlet port (130) for discharging purified fluid to the outside, and a filter body (200) which is threadedly locked to the head (100), into which the fluid flows through the guide passage (120) communicated with the inlet port (110) of the head (100), and which purifies the fluid flowing therein and transfers purified fluid to the outlet port (130) of the head (100), the filter comprising:
fluid flow interruption means comprising
at least one through-hole (210) defined on an upper end of the filter body (200) so that fluid having passed through the guide passage (120) communicated with the inlet port (110) can flow through the through-hole into the filter body (200);
an elastic spring (400);
a fluid flow interrupter (300) functioning to controllably open and close the guide passage (120) by force of the elastic spring (400) when the head (100) and the filter body (200) are coupled to and decoupled from each other;
the fluid flow interrupter (300) being disposed in the guide passage (120) communicated with the inlet port (110), and having a fluid guide rod (310) which is formed at one end of the fluid flow interrupter (300);
**characterized in that**
the fluid flow interrupter (300) further comprises an opening and closing body (320) which is connected at one end thereof to the fluid guide rod (310) and has a diameter gradually decreasing in a direction towards the filter body (200), around which an O-ring (321) is fitted and from the other end of which an opening and closing projection (322) is formed;
wherein a hollow cylindrical protuberance (121) which has an inner diameter greater than an outer diameter of the fluid guide rod (310) of the fluid flow interrupter (300) is formed at an upper end of the guide passage (120), the lower end of the guide passage (120) has an inner diameter gradually decreasing in the direction towards the filter body (200) to receive said opening and closing body (320) of the fluid flow interrupter (300), and the elastic spring (400) has one end through which the fluid guide rod (310) of the fluid flow interrupter (300) is inserted and the other end which is fitted around the hollow cylindrical protuberance (121);
wherein the lowermost end of the guide passage (120) has an inner diameter which is slightly greater than the outer diameter of the opening and closing projection (322) so that the opening and closing projection (322) of the opening and closing body (320) can pass through the lowermost end of the guide passage (120) so as to be exposed out of the lower end of the guide passage (120) and to be supportable on the upper end surface of the filter body (200).

2. The filter (A) as set forth in Claim 1, further comprising a bracket (500) having one end which is coupled to an outer surface of the head (100) and the other end which is fastened to a wall.

## Patentansprüche

1. Filter (A) für eine Wasseraufbereitungseinrichtung, umfassend ein Kopfstück (100), das mit einem Führungskanal (120) zur Führung eines Fluids versehen ist, das durch einen Einlass (110) in das Kopfstück (100) eingebracht wird, und einen Auslass (130) zur Abgabe von gereinigtem Fluid an die Außenseite und einen Filterkörper (200) aufweist, der mit dem Kopfstück (100) schraubverbunden ist, in das das Fluid durch den Führungskanal einströmt (120), der mit dem Einlass (110) des Kopfstücks (100) in Verbindung steht, und der das einströmende Fluid reinigt und das gereinigte Fluid an den Auslass (130) des Kopfstücks (100) führt, wobei der Filter Folgendes umfasst:
Fluidstromunterbrechnungsmittel, umfassend:
zumindest ein Durchgangsloch (210), das an einem oberen Ende des Filterkörpers (200) ausgebildet ist, so dass Fluid, das durch den Führungskanal (120), der mit dem Einlass (110) in Verbindung steht,
hindurch geströmt ist, durch das Durchgangsloch in den Filterkörper (200) einströmen kann,
eine elastische Feder (400);
einen Fluidstromunterbrecher (300), der zum gesteuerten Öffnen und Schließen des Führungskanals (120) durch die Kraft der elastischen Feder (400) arbeitet, wenn das Kopfstück (100) und der Filterkörper (200) miteinander gekoppelt bzw. voneinander entkoppelt sind;
wobei der Fluidstromunterbrecher in dem Führungskanal (120) angeordnet ist, der mit dem Einlass (110) in Verbindung steht, und eine Fluidführungsstange (310) aufweist, die an einem Ende des Fluidstromunterbrechers ausgebildet ist;
**dadurch gekennzeichnet, dass**
der Fluidstromunterbrecher (300) ferner einen Öffnungs- und Schließkörper (320) umfasst, der mit seinem einen Ende mit der Fluidführungsstange (310) verbunden ist und einen Durchmesser aufweist, der in Richtung des Filterkörpers (200), den ein O-Ring (321) umgreift, graduell abnimmt, und mit seinem anderen Ende einen Öffnungs- und Schließvorsprung (322) ausbildet;
wobei ein hohler zylindrischer Vorsprung (121), der einen Innendurchmesser aufweist, der größer ist als der Außendurchmesser der Fluidführungsstange (310) des Fluidstromunterbrechers (300), an einem oberen Ende des Führungskanals (120) ausgebildet ist, das untere Ende des Führungskanals (120) einen Innendurchmesser aufweist, der in Richtung des Filterkörpers (200) graduell abnimmt, um den Öffnungs- und Schließkörper (320) des Fluidstromunterbrechers (300) aufzunehmen, und die elastische Feder (400) ein Ende, durch das die Fluidführungsstange (310) des Fluidstromunterbrechers (300) eingeführt ist, und ein anderes Ende aufweist, das den hohlen zylindrischen Vorsprung (121) passend umgreift;
wobei das unterste Ende des Führungskanals (120) einen Innendurchmesser aufweist, der geringfügig größer ist als der Außendurchmesser des Öffnungs- und Schließvorsprungs (322), so dass der Öffnungs- und Schließvorsprung (322) des Öffnungs- und Schließkörpers 320 das unterste Ende des Führungskanals 120 durchgreifen, so dass dieser aus dem unteren Ende des Führungskanals 120 heraussteht und auf der oberen Endfläche des Filterkörpers 200 abgestützt werden kann.

2. Filter (A) nach Anspruch 1, ferner umfassend eine Halterung (500), die ein Ende aufweist, das mit einer Außenfläche des Kopfstücks (100) verbunden ist und deren anderes Ende an einer Wandung befestigt ist.

## Revendications

1. Filtre (A) pour un épurateur d'eau comportant une tête (100) qui est définie avec un passage de guidage (120) pour guider un fluide qui est introduit dans la tête (100) à travers un orifice d'entrée (110), et présentant un orifice de sortie (130) pour décharger le fluide épuré à l'extérieur et un corps de filtre (200) qui est relié par vissage à la tête (100) dans laquelle le fluide s'écoule à travers le passage de guidage (120) étant en communication avec l'orifice d'entrée (110) de la tête (100) et qui assure l'épuration du fluide y circulant et le transfert de fluide épuré vers l'orifice de sortie (130) de la tête (100), le filtre comportant le suivant:
des moyens d'interruption d'écoulement de fluide comprenant:
au moins un trou traversant (210) qui est défini sur une extrémité supérieure du corps de filtre (200) de sorte que le fluide ayant traversé le passage de guidage (120) puisse s'écouler par le trou traversant (210) pour pénétrer dans le corps de filtre (200) un ressort élastique (400);
un interrupteur d'écoulement de fluide (300) qui est disposé en vue de l'ouverture et de la fermeture contrôlées du passage de guidage (120) par une force de ressort élastique (400) lorsque la tête (100) et le corps de filtre (200) sont mutuellement reliés ou déconnectés;
dans lequel l'interrupteur d'écoulement de fluide (300) est disposé dans le passage de guidage (120) étant en communication avec l'orifice d'entrée (110) et présente une barre de guidage de fluide (310) qui est formé à l'une extrémité de l'interrupteur d'écoulement de fluide (300);
**caractérisé en ce que**
l'interrupteur d'écoulement de fluide (300) en outre comporte un corps d'ouverture et de fermeture (320) qui avec l'une de ses extrémités est relié à la barre de guidage de fluide (310) et a un diamètre diminuant graduellement vers le corps de filtre (200) qui est entouré par un joint torique (321), et à partir de son autre extrémité forme une saillie d'ouverture et de fermeture (322);
dans lequel une protubérance (121) creuse en forme de cylindre ayant un diamètre intérieur qui est plus grand que le diamètre extérieur de la barre de guidage de fluide (310) de l'interrupteur d'écoulement de fluide (300) est formée à une extrémité supérieure du passage de guidage (120), l'extrémité inférieure du passage de guidage (120) ayant un diamètre intérieur diminuant graduellement vers le corps de filtre (200) afin d'accommoder ledit corps d'ouverture et de fermeture (320) de l'interrupteur d'écoulement de fluide (300), et le ressort élastique (400) présentant une extrémité à travers laquelle la barre de guidage de fluide (310) du l'interrupteur d'écoulement de fluide (300) est introduite, et l'autre extrémité de celui-ci entourant la protubérance (121) creuse en forme de cylindre de manière ajustée;
dans lequel l'extrémité la plus inférieure du passage de guidage (120) a un diamètre intérieur qui est legèrement plus grand que le diamètre extérieur de la saillie d'ouverture et de fermeture (322) de sorte que la saillie d'ouverture et de fermeture (320) puisse pénétrer dans l'extrémité la plus inférieure du passage de guidage (120) de manière à ce que celle-ci soit exposée en dehors de l'extrémité inférieure du passage de guidage (120) et puisse être appuyée sur la surface terminale supérieure du corps de filtre (200).

2. Filtre (A) selon la revendication 1, en outre comportant un support (500) ayant une extrémité qui est reliée à la surface extérieure de la tête (100) et ayant une autre extrémité qui est fixée à une paroi.
